# EUROPEAN PATENT APPLICATION

(11) **EP 0 826 301 A2**
(43) Date of publication of application: **04.03.1998**
(21) Application number: 97650035.5
(22) Date of filing: 21.08.1997
(51) Int. Cl.: A01G 9/14

(54) **Improvements in and relating to gantries**

(30) Priority: 30.08.1996 IE 960612
(71) Applicant: Calder-Potts, Cito Roderick, Cuffesgrange, County Kilkenny (IE); Calder-Potts, Julie Eleanor, Cuffesgrange, County Kilkenny (IE)
(72) Inventor: Calder-Potts, Cito Roderick, Cuffesgrange, County Kilkenny (IE); Calder-Potts, Julie Eleanor, Cuffesgrange, County Kilkenny (IE)
(74) Representative: O'Connor, Donal Henry

(57) **Abstract**

The invention provides a crop handling assembly for mounting on overhead gantry rails (7) having an overhead trolley (3) for mounting on the rails (7), a separate suspension structure (2) for releasably engaging the overhead trolley and a crop handling unit, in this drawing an irrigation unit (1) is carried by the suspension structure (2). Preferably the suspension structure (2) is mounted on jockey wheels (34) so that it can be moved between gantries and between growing houses.

## Description

### Introduction

The present invention relates to horticultural structures for crop lighting, irrigation, spraying and handling generally and in particular is directed, but not exclusively, to an irrigation assembly for use with an overhead gantry rail.

In many horticultural situations and in particular indoors such as in greenhouses, mushroom growing houses etc. the need for the accurate spraying and irrigation of crops is essential. The capital cost of such irrigation and spraying equipment is not alone inherently, but also relatively very expensive and forms a major portion of the capital cost of growing units. It is known to provide an irrigation assembly for use with an overhead gantry rail which comprises a full irrigation assembly which is driven along the gantry and can be used to irrigate and spray the crops. Such assemblies are relatively expensive, particularly when it is considered that most growing units are multi-house systems and a large number of these extremely expensive assemblies are required.

Horticulturalists and others engaged in this industry have for many years been aware of the problem, which is quite simply stated as on the one hand overhead irrigation assemblies are the ideal way for irrigating and spraying crops, while at the same time the capital cost such limits their use.

A further problem that arises in relation to such overhead gantries is that sometimes there is also provided with them a lighting system mounted on a boom in much the same way that an irrigation system is mounted, which lighting system is used to extend, in effect, the daylight hours by passing back and forth across the plants and effectively "fooling" the plants by this intermittent light into believing that they are under constant light and thus the growing day is extended. Again such assemblies are generally fixed on their own dedicated gantry system which is, as mentioned above, relatively expensive.

Further an unrelated problem to the one to which the present invention is primarily directed towards alleviating is the general handling of crops within a growing house. When the crops are being harvested the crops have to be placed on trays and in turn on trolleys or into large containers which have to be pushed around the growing house and generally along a central gangway or along a series of gangways. This often requires the provision of tractor units etc. It would indeed be advantageous if crops, equipment, etc. could be moved along the growing house without the need for separate power units where a gantry is already provided.

The present invention is directed towards overcoming such problems and providing an assembly for use with an overhead gantry rail which will be not alone efficient in use such as with the present assemblies, but will be constructed in such a way as to be a economic proposition for use in multi-house growing units, or more properly in growing units where there is a multiplicity of gantries.

### Statements of Invention

According to the invention there is provided a crop handling assembly of the type for use with an overhead gantry having an overhead trolley for mounting on the rail and a suspension structure carrying a crop handling unit below the trolley characterised in that the suspension structure (2) is releasably secured to the overhead trolley (3).

The crop handling unit may be an irrigation unit, a crop lighting unit, a crop container or a mechanical handling unit. The advantage of this will be relatively apparent in that the same expensive equipment, namely, the irrigation unit with its associated pumps, control gear, etc. can be used with more than one gantry, simply by disconnecting from the overhead trolley. The same advantage applies to a greater or lesser extent to each of the units. Thus many types of equipment that would be totally uneconomic and possibly impractical to fit in a number of growing houses immediately become available.

Similarly with lighting equipment, while not as expensive necessarily as irrigation equipment, it is possible to avoid the necessity for providing separate lighting equipment in each growing house and simply use the one set of lighting equipment in each one, with a reduction in maintenance, storage and indeed capital cost. It is also possible to combine both lighting and irrigation systems in the one unit. With, for example, a crop container, the crop container can be moved around the house and delivered to a suitable place for subsequent removal from the house.

Ideally, a trolley drive motor is mounted on the suspension structure and releasably engages a drive for the trolley. Keeping the trolley drive motor remote from the trolley ensures that the minimum amount of equipment is now provided on each gantry, namely, sufficient gear to allow trailing cables and hoses to be handled and sufficient on the gantry rails themselves to obviate the necessity of time consuming fitting of the irrigation unit to the gantry.

In one embodiment of the invention when the crop handling assembly is an irrigation unit it comprises:
a spray bar;
a pump having a water inlet and a water outlet feeding the spray bar; and
control equipment for the unit.

This is an ideal form of irrigation unit in that it is relatively simple in use. The pump will allow adequate control of the unit to ensure that the correct amount of water is provided.

Ideally, the spray bar is demountable. It is particularly advantageous to have the spray bar demountable as the irrigation unit will be transported from overhead gantry to overhead gantry rail as well as from house to house.

Ideally, the suspension structure carries a jockey wheel and preferably four jockey wheels. The advantage of this is that jockey wheels are relatively inexpensive. They can be jacked up to allow the suspension structure to be mounted on the overhead trolley and then jacked up further clear of the ground for the spraying work, subsequently jacked down to relieve the weight of the suspension unit from the overhead trolley to allow relatively easy disengagement of the suspension unit from the overhead trolley and then to allow the suspension unit to be moved easily from place to place.

Ideally the suspension structure carries a quick release water inlet and in another embodiment both a quick release water inlet and a quick release electric power connector. Again everything should be done to ensure the quick assembly and disassembly of the suspension unit from the trolley unit.

In a still further embodiment of the invention the suspension structure incorporates footholds which facilitate the interconnection of drives and supplies between the overhead trolley and the suspension structure.

### Detailed Description of the Invention

The invention will be more clearly understood from the following description of an embodiment thereof given by way of example only with reference to the accompanying drawings in which:-
Fig. 1 is a perspective view of portion of an irrigation assembly according to the invention with some portions removed for clarity;
Fig. 2 is an end sectional view of a greenhouse;
Fig. 3 is a front view of an overhead trolley used with the irrigation assembly;
Fig. 4 is a plan view of the trolley of Fig. 3;
Fig. 5 is a plan view of a trailing gantry for hose and electrical supply for use with the irrigation assembly;
Fig. 6 is a side view of a tensioning pulley used in the trailing gantry; and
Fig. 7 is a side view of a roller used with the trailing gantry.

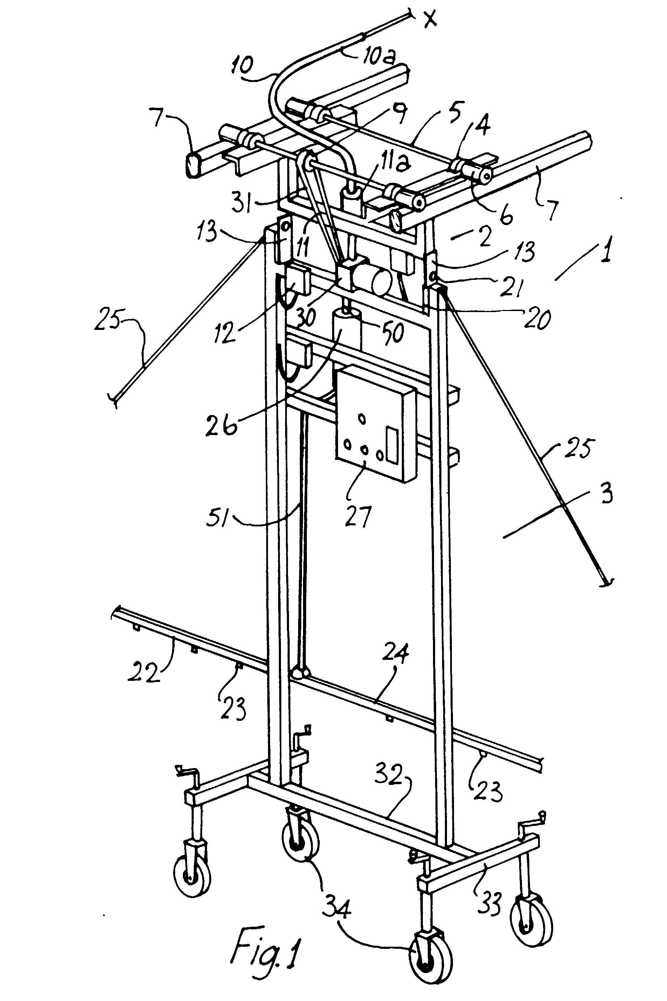

Referring to the drawings and initially to Figs. 1 to 4, there is illustrated an irrigation assembly, indicated generally by the reference numeral 1, comprising two main parts, namely, an overhead trolley, indicated by the reference numeral 2, and a separate suspension structure, indicated by the reference numeral 3, on which is mounted an irrigation unit as will be described hereinafter. The overhead trolley 2 comprises a framework on which is mounted by means of bearings 4 and shafts 5, rubber rollers 6 for engagement with gantry rails 7 as is illustrated in Figs. 1, 3 and 4. The gantry rails 7 are manufactured from "ovalised" steel tubing as can be seen clearly from the drawings. Conventional roller guides 8 are provided.

One of the shafts 5 carries a drive pulley 9. A hose 10, inside which is a power cable 10a, is connected to the overhead trolley 2 and feeds down into a quick release connector lla on a cross-member 11 in the overhead trolley 2. The cable 10a is also connected to a separate power take-off in the quick release connector 11a. The hose 10 thus has two functions namely water delivery and as an electric cable conduit. Similarly the quick release connector 11a is a combined electrical and hydraulic connector. The overhead trolley 2 carries an electrical output socket 12 which is only illustrated in Fig. 1. The socket 12 is fed from the quick release connector lla. The overhead trolley 2 carries a pair of suspension plates 13 for connection to the suspension structure 3. The overhead trolley 2 also carries a wire 14 for connection to a trailing gantry as will be described later.

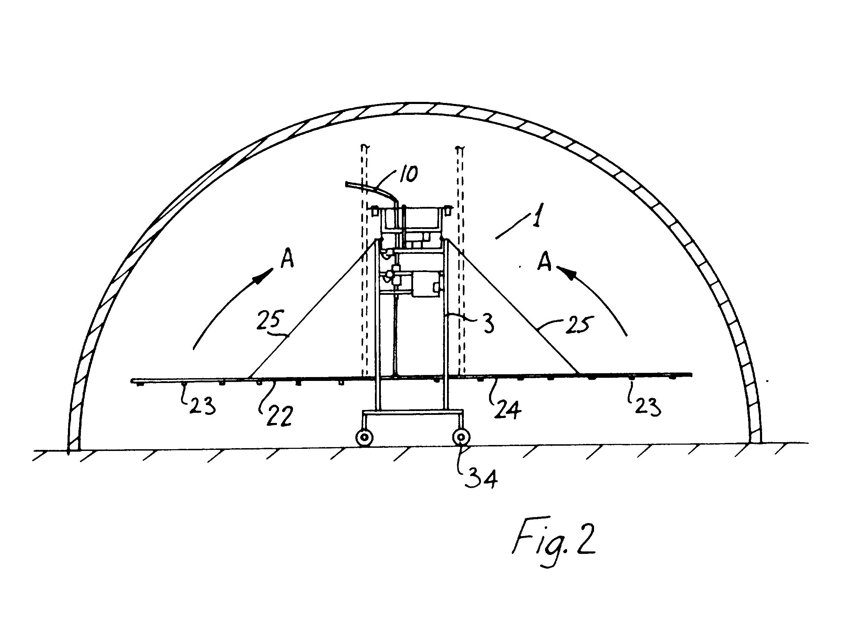

The suspension structure 3 comprises a framework or box section carrying a pair of hanger plates 20 for releasable connection to the suspension plates 13 by bolts 21. The suspension structure 3 carries an irrigation unit formed from a spray bar 22 carrying spray nozzles 23 of conventional construction. The spray bar 22 includes a pivot joint 24 which allows the spray bars 22 which are supported by suspension wires 25 on the suspension structure 3 to be pivoted in the direction of the arrow A, see Fig. 2, to take up the position illustrated by the interrupted lines. A mixing pump unit 26 such as sold under the Trade Mark DOSOTRON is mounted on the suspension structure 3. The mixing pump 26 is fed by a water inlet pipe 50 from the quick release connector lla and in turn feeds through a further water outlet pipe 51 the spray bar 22. The suspension structure 3 also carries a control panel 27 housing the necessary control equipment; a switch box for the water pump and mixer unit 26; and an electrical trolley drive motor 30 which in turn drives the drive pulley 9 through a vee-belt 31.

On a further cross member 32 forming part of the suspension structure 3 there is mounted a pair of struts 33 carrying conventional height adjustable jockey wheels 34. The suspension structure 3 also carries conventional limit switches, not shown.

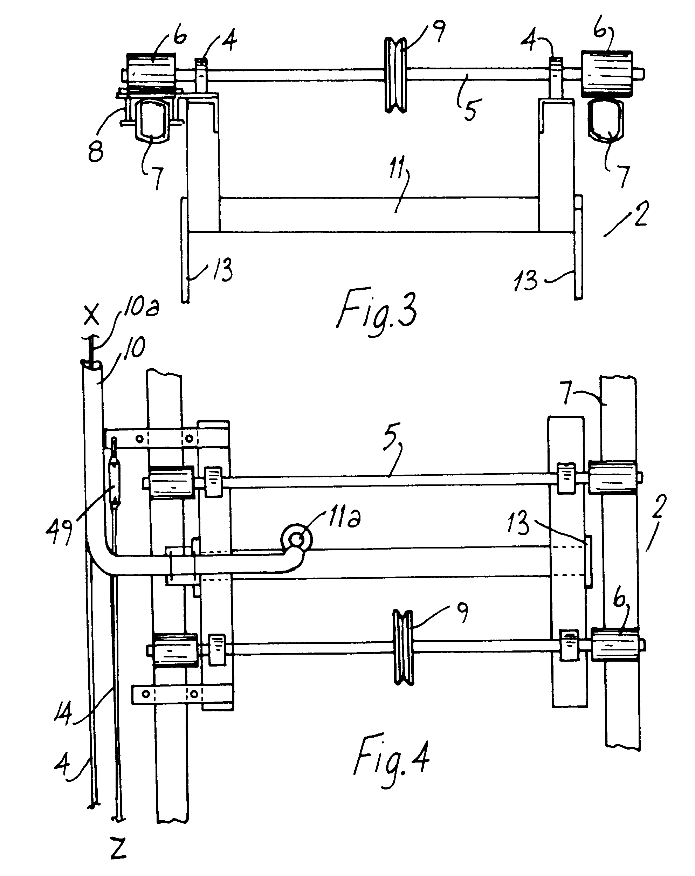

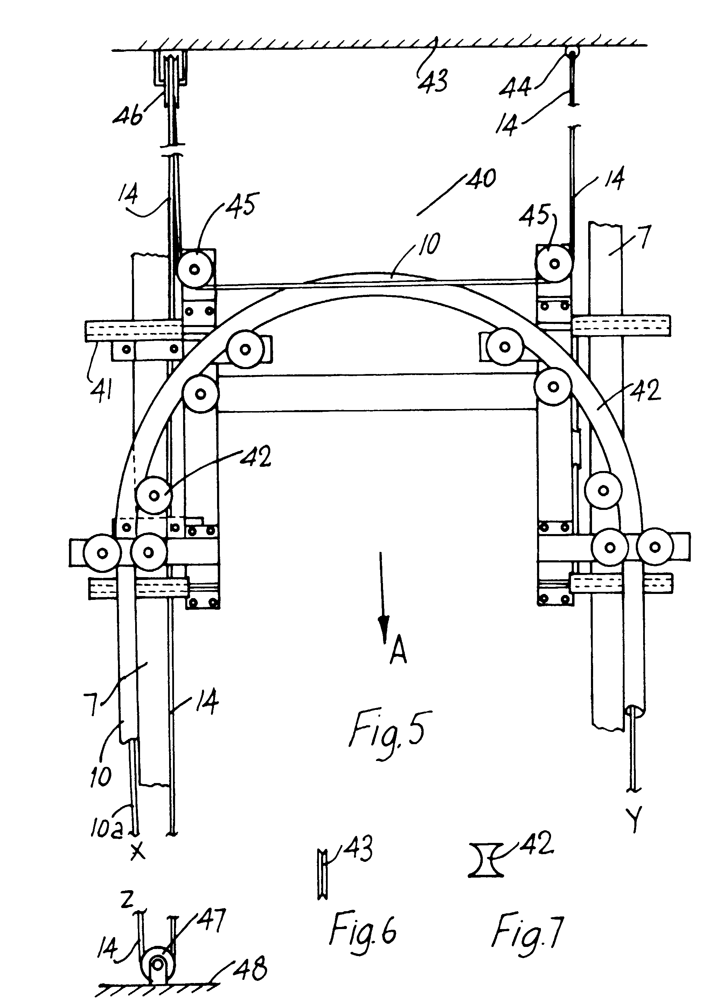

Referring to Figs. 5 to 7 inclusive, there is illustrated a trailing gantry for the hose 10, which is identified by the reference numeral 40, which trailing gantry 40 comprises a framework carrying rollers 41 mounted on the rails 7 and is trailed behind the overhead trolley 2. The hose 10 is mounted between a plurality of nylon rollers 42 which form a generous semi-circle to allow the hose 10 to move smoothly around them. The hose 10 and its housed electric cable 10a, as indicated by the letter X on Fig. 5 are connected to the overhead trolley 2 and at its other end as indicated by the letter Y on Fig. 5 connected to water and power supply, not shown. The connection of the hose 10 and electric cable 10a to the trolley 2 is also shown by the letter X in Figs. 1 and 4. Thus, the hose 10, as the overhead trolley 2 moves in one direction, namely the direction of the arrow A on Fig. 5, will be pulling the trailing gantry 40 behind the overhead trolley 2.

The wire 14 illustrated in Fig. 4 is secured to an end wall 43 of the growing house by an anchorage 44 and across pulleys 45 on the trailing gantry 40 to a further pulley 46 on the end wall 43 and then from the pulley 46 to a further pulley 47 on an opposite end wall 48 to the overhead trolley 2. The connection of the wire 14 between Figs. 4 and 6 is identified by the reference letter Z on both drawings. The wire 14 is connected to the overhead trolley 2 by a turn-buckle 49 as can be seen in Fig. 4. Thus, the wire 14 is led from the overhead trolley 2 to this pulley 47, then back overlapping itself to the further pulley 46 on the end wall 43 then to the trailing gantry 40 and back again to the other end wall 43.

In operation, in one direction as mentioned already, the trailing gantry 40 is pulled by the hose 10 and in the other direction by the wire 14, obviously only moving at half the speed of the overhead trolley 2 due to the arrangement of the pulleys and thus it moves across half the growing house.

The operation of the trailing gantry 40 is generally that of any conventional trailing gantry and does not require any further description.

In operation with the irrigation assembly, when assembled as illustrated in Fig. 1 and as shown in Fig. 2 the irrigation of the greenhouse unit proceeds in normal manner. When the irrigation operation has been completed the jockey wheels are lowered 34 to take the weight of the suspension structure and then the bolts 21 are loosened and the electrical and water connections broken. The vee-belt 31 has to be disconnected from the motor 30 and can be left loose on the drive pulley 9. The suspension structure 3 may be wheeled away from the overhead trolley and moved to another location where it can be mounted on another gantry.

Once the suspension structure 3 has been securely mounted on the overhead trolley 2 the jockey wheels are raised and irrigation can then commence.

In a further embodiment of the invention, the suspension structure is manufactured of sufficiently lightweight materials and if necessary of one or more interlocking pieces as to be easily portable from place to place eliminating the need for jockey wheels or other wheeled supports. With this embodiment a permanent motor is either provided on each overhead trolley or is demountable from the suspension structure.

It is envisaged that instead of connecting the suspension structure 3 to the overhead trolley 2 by bolts that other easier, quick connections could be used such as a simple hook. This would have the advantages of quicker connection and if able to pivot slightly of less likelihood of physical damage on impact.

It is also envisaged that in relation to the electrical and water connections that ideally quick-fit and quick release connectors may be used.

It is envisaged that instead of having an irrigation assembly that the assembly may simply be a lighting assembly mounted on a boom which lighting assembly would be operated in substantially the same way as the irrigation assembly or indeed could be operated in parallel and conjunction with the irrigation assembly.

It is also envisaged that trolleys, containers and the like may be suspended from the gantry. Such a trolley may include wheels, mounted on jockey wheels such as described above, or indeed any other form of container. For example, it may be possible to mount such containers by means of standard pulleys and suspend them from the gantry. Various forms of mechanical handling equipment may form the crop handling unit. For example, it is envisaged that the unit could comprise a pair of laterally projecting gantry arms having a winch suspended therefrom to allow the movement of crops and equipment around the growing area. It will be appreciated that many other variations in equipment etc. may be mounted on the gantry.

It will be appreciated that a major advantage of the present invention is that it allows the horticulturalist to use many types of specialised or optional equipment from time to time which would be totally impractical to have as a permanent fixture in the one growing unit. Indeed many of these would only be hired as required. Even if a wide range of equipment were to be required in the one growing unit the suspension of all these simultaneously from the one overhead gantry would lead to problems in relation to crowding and overload.

A further advantage is that the majority of the maintenance and cleaning of the equipment does not have to be done in situ.

It is envisaged that the suspension structure may incorporate a ladder, working platform or any form of climbing or support aid hereinafter footholds. This will facilitate the interconnection of drives and supplies between the overhead trolley and the suspension structure.

The invention is not limited to the embodiments hereinbefore described which may be varied in both construction and detail.

## Claims

1. A crop handling assembly of the type for use with an overhead gantry having an overhead trolley for mounting on the rail and a suspension structure carrying a crop handling unit below the trolley characterised in that the suspension structure (2) is releasably secured to the overhead trolley (3).

2. A crop handling assembly as claimed in claim 1 in which the crop handling unit is an irrigation unit (1).

3. A crop handling assembly as claimed in claim 1 in which the crop handling unit is a lighting unit.

4. A crop handling assembly as claimed in claim 1 in which the crop handling unit is a container.

5. A crop handling assembly as claimed in claim 1 in which the crop handling unit is a mechanical handling unit comprising a gantry and winch mountable transversely with respect to the overhead gantry rail.

6. A crop handling assembly as claimed in claim 2 in which a trolley drive motor (30) for the irrigation unit (1) is mounted on the suspension structure and releasably engages a drive (9) for the trolley.

7. An crop handling assembly as claimed in claim 2 or 6 in which the irrigation unit (1) comprises:
a spray bar (22);
a pump (26) having a water inlet pipe (50) and a water outlet pipe (51) feeding the spray bar (22) ; and
control equipment for the unit.

8. A crop handling assembly as claimed in claim 7 in which the spray bar (22) is demountable.

9. A crop handling assembly as claimed in any preceding claim in which the suspension structure (2) carries a jockey wheel (34).

10. A crop handling assembly as claimed in claim 9 in which there are four jockey wheels (34).

11. A crop handling assembly as claimed in any preceding claim in which the suspension structure (2) carries a quick release water inlet (11a).

12. A crop handling assembly as claimed in any preceding claim in which the suspension structure carries a quick release electric power connector (11a).

13. A crop handling assembly as claimed in any preceding claim in which the suspension structure (2) incorporates footholds.
